(19) Europäisches Patentamt / European Patent Office / Office européen des brevets

(11) **EP 3 623 047 B1**

(12) **EUROPÄISCHE PATENTSCHRIFT**

(45) Veröffentlichungstag und Bekanntmachung des Hinweises auf die Patenterteilung:
**24.02.2021  Patentblatt 2021/08**

(51) Int Cl.:
**B01J 35/00** *(2006.01)*  **B01J 23/63** *(2006.01)*
**B01D 53/94** *(2006.01)*  **F01N 3/08** *(2006.01)*

(21) Anmeldenummer: **18194826.6**

(22) Anmeldetag: **17.09.2018**

(54) **KATALYSATOR ZUR REDUKTION VON STICKOXIDEN**

CATALYST FOR REDUCING NITROGEN OXIDES

CATALYSEUR DE RÉDUCTION D'OXYDES D'AZOTE

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(43) Veröffentlichungstag der Anmeldung:
**18.03.2020  Patentblatt 2020/12**

(73) Patentinhaber: **UMICORE AG & CO. KG**
**63457 Hanau-Wolfgang (DE)**

(72) Erfinder:
• **HOYER, Ruediger**
  **63755 Alzenau (DE)**
• **HANZAWA, Masaya**
  **Kisarazu, Chiba 292-0819 (JP)**

(56) Entgegenhaltungen:
US-A1- 2006 117 736    US-A1- 2013 150 236
US-A1- 2013 310 248    US-A1- 2015 202 572
US-A1- 2017 096 923    US-A1- 2018 195 425

**Beschreibung**

Die vorliegende Erfindung betrifft einen Katalysator zur Reduktion von Stickoxiden, das im Abgas mager betriebener Verbrennungsmotoren enthalten ist.

Das Abgas von Kraftfahrzeugen, die mit mager betriebenen Verbrennungsmotoren, beispielsweise mit Dieselmotoren, betrieben werden, enthält neben Kohlenmonoxid (CO) und Stickoxiden ($NO_x$) auch Bestandteile, die aus der unvollständigen Verbrennung des Kraftstoffs im Brennraum des Zylinders herrühren. Dazu gehören neben Rest-Kohlenwasserstoffen (HC), die meist ebenfalls überwiegend gasförmig vorliegen, Partikelemissionen, auch als "Dieselruß" oder "Rußpartikel" bezeichnet. Dabei handelt es sich um komplexe Agglomerate aus überwiegend Kohlenstoff-haltigen FeststoffTeilchen und einer anhaftenden Flüssigphase, die meist mehrheitlich aus längerkettigen Kohlenwasserstoff-Kondensaten besteht. Die auf den festen Bestandteilen anhaftende Flüssigphase wird auch als "Soluble Organic Fraction SOF" oder "Volatile Organic Fraction VOF" bezeichnet.

Zur Reinigung dieser Abgase müssen die genannten Bestandteile möglichst vollständig in unschädliche Verbindungen umgewandelt werden, was nur unter Einsatz geeigneter Katalysatoren möglich ist.

Zur Entfernung der Stickoxide sind sogenannte Stickoxid-Speicherkatalysatoren, für die auch der Begriff "Lean NOx Trap" oder "LNT" üblich ist, bekannt. Deren Reinigungswirkung beruht darauf, dass in einer mageren Betriebsphase des Motors die Stickoxide vom Speichermaterial des Speicherkatalysators vorwiegend in Form von Nitraten gespeichert werden und diese in einer darauf folgenden fetten Betriebsphase des Motors wieder zersetzt und die so freiwerdenden Stickoxide mit den reduzierenden Abgasanteilen am Speicherkatalysator zu Stickstoff, Kohlendioxid und Wasser umgesetzt werden. Diese Arbeitsweise ist beispielsweise in der SAE-Schrift SAE 950809 beschrieben.

Als Speichermaterialien kommen insbesondere Oxide, Carbonate oder Hydroxide von Magnesium, Calcium, Strontium, Barium, der Alkalimetalle, der Seltenerdmetalle oder Mischungen davon in Frage. Diese Verbindungen sind aufgrund ihrer basischen Eigenschaften in der Lage, mit den sauren Stickoxiden des Abgases Nitrate zu bilden und sie auf diese Weise abzuspeichern. Sie sind zur Erzeugung einer großen Wechselwirkungsfläche mit dem Abgas in möglichst hoher Dispersion auf geeigneten Trägermaterialien abgeschieden. Stickoxid-Speicherkatalysatoren enthalten darüber hinaus in der Regel Edelmetalle wie Platin, Palladium und/oder Rhodium als katalytisch aktive Komponenten. Deren Aufgabe ist es einerseits, unter mageren Bedingungen NO zu $NO_2$, sowie CO und HC zu $CO_2$ zu oxidieren und andererseits während der fetten Betriebsphasen, in denen der Stickoxid-Speicherkatalysator regeneriert wird, freigesetztes $NO_2$ zu Stickstoff zu reduzieren.

Ein weiteres Verfahren zur Entfernung von Stickoxiden aus Abgasen in Gegenwart von Sauerstoff ist die selektive katalytische Reduktion (SCR-Verfahren) mittels Ammoniak an einem geeigneten Katalysator. Bei diesem Verfahren werden die aus dem Abgas zu entfernenden Stickoxide mit Ammoniak zu Stickstoff und Wasser umgesetzt. Das als Reduktionsmittel verwendete Ammoniak kann durch Eindosierung einer Ammoniakvorläuferverbindung, wie beispielsweise Harnstoff, Ammoniumcarbamat oder Ammoniumformiat, in den Abgasstrang und anschließende Hydrolyse verfügbar gemacht werden.

Als SCR-Katalysatoren können beispielsweise bestimmte Metallausgetauschte Zeolithe verwendet werden, wobei je nach Anwendungsbereich insbesondere Eisen-ausgetauschte β-Zeolithe und Kupfer-ausgetauschte kleinporige Zeolithe, zum Beispiel Chabazite, im Einsatz sind. Als SCR-Katalysatoren sind daneben sogenannte Mischoxid-Katalysatoren in Gebrauch. Dabei handelt es sich insbesondere um Vanadiumoxid, Wolframoxid und gegebenenfalls weitere Oxide enthaltende Verbindungen, die in der Regel als Trägeroxid Titandioxid enthalten.

Zur Erfüllung der Euro 6d und zukünftiger Abgasgesetzgebungen müssen Abgassysteme verwendet werden, die über einen großen Temperaturbereich hohe CO- und NOx-Konvertierungsraten zeigen. Solche Systeme können eine Kombination aus Stickoxid-Speicherkatalysatoren und SCR-Katalysatoren sein, wobei insbesondere der Stickoxid-Speicherkatalysator hohen Anforderungen genügen muss. So ist besonders bei Stadtfahrten, bei denen die Abgastemperaturen 200°C nicht übersteigen, eine effiziente NOx-Speicherung und -Umsetzung eine große Herausforderung. Außerdem muss der Stickoxid-Speicherkatalysator für eine effektive NOx-Konvertierung durch den SCR-Katalysator genügend $NO_2$ zur Verfügung stellen.

Es hat sich bereits in der Vergangenheit gezeigt, dass zum Beispiel Stickoxid-Speicherkatalysatoren dann bestmögliche Aktivität zeigen, wenn die unterschiedlichen Komponenten bzw. Funktionen des Katalysators räumlich getrennt sind und somit unerwünschte Wechselwirkungen vermieden werden.

So offenbart die WO2011/154913 einen Katalysator aus drei auf einem Katalysatorsubstrat übereinanderliegenden Schichten, wobei die unterste Schicht ein Stickoxidspeichermaterial, die mittlere Schicht ein Material zur Umsetzung von Stickoxiden und die obere Schicht einen Kohlenwasserstoff-Speicher enthalten.

Die WO2017/191099 beschreibt einen Katalysator, bei dem auf einem Tragkörper drei Materialzonen in bestimmter Weise angeordnet sind. Weitere Stickoxidspeicher-Katalysatoren aus mindestens zwei Schichten sind in EP0885650 A2, WO2009/158453A1, WO2012/029050 A1, WO2014/108362 A1, WO2017/134065 A1 und WO2017/144426 A1 offenbart.

US2013/150236 A1, US2013/310248 A1, US 2018/195426 A1, US2017/096923 A1, US2015/202572 A1 und US2006/117736 A1 offenbaren ebenfalls Katalysatoren mit mindestens zwei Materialzonen.

Es sind aber künftig weiterentwickelte Stickoxidspeicher-Katalysatoren nötig, bei denen besonders NOx-Speicherung bei niedrigen Temperaturen sowie eine effiziente Desulphatisierung bei niedrigen Temperaturen gewährleistet ist.

Die vorliegende Erfindung betrifft einen Stickoxid-Speicherkatalysator, der ein Trägersubstrat der Länge L, welches sich zwischen einer ersten Stirnfläche a und einer zweiten Stirnfläche b erstreckt, sowie unterschiedlich zusammengesetzte katalytisch aktive Materialzonen A, B und C umfasst, wobei

- Materialzone A Platin oder Platin und Palladium, ein oder mehrere Erdalkaliverbindungen sowie Ceroxid enthält. Die Beladung an Platin oder Platin und Palladium beträgt beispielsweise 20 - 50 g/ft$^3$ (0,71 - 1,77 g/l), der Ceroxidgehalt 20 - 70 g/l bezogen auf das Katalysatorvolumen. Der Erdalkalioxidgehalt liegt beispielsweise bei 10 - 20 g/l bezogen auf das Katalysatorvolumen.
- Materialzone B Platin oder Platin und Palladium sowie Ceroxid enthält. Die Edelmetallbeladung beträgt beispielsweise 20 - 50 g/ft$^3$ (0,71 - 1,77 g/l), der Ceroxidgehalt 60 - 120 g/l bezogen auf das Katalysatorvolumen.
- Materialzone C Platin oder Platin und Palladium sowie Rhodium und Ceroxid enthält. Die Edelmetallbeladung beträgt beispielsweise 20 - 60 g/ft$^3$ (0,71 - 1,12 g/l), der Ceroxidgehalt 60 - 120 g/l bezogen auf das Katalysatorvolumen.

wobei

- Materialzone A sich ausgehend von Stirnfläche b auf einer Länge von 30 - 90%, bevorzugt 50 - 80% der Länge L erstreckt und
- Materialzone B sich ausgehend von der Stirnfläche a auf einer Länge von 10% - 70%, bevorzugt 20 - 50% der Länge L erstreckt und
- Materialzone C über Materialzone A angeordnet ist und sich ausgehend von Stirnfläche b über 30 - 90%, bevorzugt 50 - 80% der Länge L erstreckt

Eine Ausführungsform des erfindungsgemäßen Stickoxid-Speicherkatalysators umfaßt eine Materialzone D über Materialzone B und C und beinhaltet Platin oder Platin und Palladium mit einem Verhältnis Pt/Pd > 5/1, bevorzugt Pt/Pd > 10/1. Die Beladung an Platin oder Platin und Palladium beträgt beispielsweise 10 - 40 g/ft$^3$ (0,35 - 1,41 g/l) bezogen auf das Katalysatorvolumen. Bevorzugt erstreckt sich Materialzone D über die gesamte Länge des Katalysators.

In einer Ausführungsform der vorliegenden Erfindung enthält Materialzone A Platin und kein Palladium. Sofern sie jedoch Platin und Palladium enthält, ist das Gewichtsverhältnis Pt/Pd > 2/1, bevorzugt Pt/Pd > 5/1.

In einer Ausführungsform der vorliegenden Erfindung enthält Materialzone B Platin und kein Palladium. Sofern sie jedoch Platin und Palladium enthält, ist das Gewichtsverhältnis Pt/Pd > 2/1, bevorzugt Pt/Pd > 5/1.

In einer Ausführungsform der vorliegenden Erfindung enthält Materialzone C Platin und Rhodium und kein Palladium.

In einer Ausführungsform der vorliegenden Erfindung enthält Materialzone D Platin und kein Palladium.

Als Erdalkaliverbindung in der Materialzone A kommen insbesondere Oxide, Carbonate und/oder Hydroxide von Magnesium, Strontium und/oder Barium in Frage, besonders Magnesiumoxid und Bariumoxid.

In allen Materialzonen liegen die Edelmetalle Platin bzw. Platin und Palladium üblicherweise auf geeigneten Trägermaterialien vor. Als solche werden insbesondere Oxide mit einer BET-Oberfläche von 30 bis 250 m$^2$/g, bevorzugt von 100 bis 200 m$^2$/g (bestimmt nach DIN 66132) verwendet, beispielsweise Aluminiumoxid, Siliziumdioxid, Titandioxid, aber auch Mischoxide wie beispielsweise Aluminium-Silizium-Mischoxide und Cer-Zirkon-Mischoxide.

In Ausführungsformen der vorliegenden Erfindung wird als Trägermaterial für die Edelmetalle Platin bzw. Platin und Palladium Aluminiumoxid verwendet, insbesondere solches, das durch 1 bis 6 Gew.-%, insbesondere 4 Gew.-%, Lanthanoxid stabilisiert ist.

Das eingesetzte Ceroxid kann handelsüblicher Qualität sein, d.h. einen Ceroxid-Anteil von 90 bis 100 Gew.-% aufweisen. Bevorzugt ist Ceroxid, das auch nach einer Kalzinierung von 6 Stunden bei 1150°C noch eine Oberfläche vom mindestens 10 m$^2$/g aufweist. Ceroxid mit diesen Oberflächeneigenschaften ist bekannt und zum Beispiel in EP 1 527 018 B1 beschrieben.

Die Aufbringung der katalytisch aktiven Materialzonen A, B, C und D auf den Tragkörper mit der gewünschten Zonenlänge erfolgt nach den üblichen Tauchbeschichtungsverfahren bzw. Pump- und Saug-Beschichtungsverfahren mit sich anschließender thermischer Nachbehandlung (Kalzination und gegebenenfalls Reduktion mit Formiergas oder Wasserstoff). Diese Verfahren sind aus dem Stand der Technik hinreichend bekannt.

Die dafür notwendigen Beschichtungssuspensionen können nach dem Fachmann bekannten Verfahren erhalten werden. So werden die Bestandteile der einzelnen Materialzonen in den entsprechenden Mengen in Wasser aufgeschlämmt und in einer geeigneten Mühle, insbesondere einer Kugelmühle, auf eine Teilchengröße von $d_{50}$ = 3 bis 5 $\mu$m gemahlen.

Die erfindungsgemäßen Stickoxid-Speicherkatalysatoren eignen sich in hervorragender Weise zur Konvertierung von $NO_x$ in Abgasen von Kraftfahrzeugen, die mit mager betriebenen Motoren, etwa Dieselmotoren, betrieben werden. Sie erreichen eine gute NOx-Konvertierung bei Temperaturen von circa 200 bis 450°C, ohne dass die NOx-Konvertierung bei hohen Temperaturen negativ beeinflusst wird. Die erfindungsgemäßen Stickoxid-Speicherkatalysatoren sind somit für Euro 6 Anwendungen geeignet.

Die vorliegende Erfindung betrifft somit auch ein Verfahren zur Konvertierung von $NO_x$ in Abgasen von Kraftfahrzeugen, die mit mager betriebenen Motoren, etwa Dieselmotoren, betrieben werden, das dadurch gekennzeichnet ist, dass das Abgas über einen erfindungsgemäßen Stickoxid-Speicherkatalysator von Stirnfläche a in Richtung Stirnfläche b geleitet wird.

Die Erfindung wird in den nachfolgenden Beispielen und Figuren erläutert.

Vergleichsbeispiel 1 - Referenzkatalysator RK1:

Zur Herstellung des Referenzkatalysators werden zunächst 1,17g/l Pt aus einer Platinsalzlösung in einer wässerigen Suspension auf 20g/l Aluminiumoxid adsorbiert. Anschließend werden 50g/l Ceroxid, 0,12 g/l Pd als Pd-Nitrat sowie 2,5 g/l Magnesiumoxid als Magnesium-Acetat zur Suspension gegeben. Zusätzlich werden 125g/l eines mit 10 Gewichts-% $CeO_2$ und 17 Gewichts-% BaO belegtem Magnesiumaluminat zur Suspension gegeben. 199 g/l dieser Washcoatsuspension werden als Materialzone A auf den Träger aufgebracht. Anschließend wird der Katalysator getrocknet und 2h bei 550°C getempert.

Zur Herstellung der Materialzone C werden zunächst 1,17 g/l Pt in einer wässerigen Lösung auf 20 g/l Aluminiumoxid adsorbiert. Anschließend werden 90 g/l Ceroxid sowie 0,12 g/l Pd und 0,18g/l Rh als Nitrate zur Suspension hinzugefügt. 112 g/l dieser Suspension werden als Materialzone C auf die bereits vorhandene Materialzone A aufgebracht. Anschließend wird der Katalysator getrocknet und 2h bei 550°C getempert.

Vergleichsbeispiel 2 - Referenzkatalysator RK2:

Zur Herstellung dieses Katalysators wird auf Katalysator RK1 zusätzlich eine Materialzone D aufgebracht, die Platin und Palladium auf Aluminiumoxidträgerpulver enthält, oberhalb von Materialzone A angeordnet ist und sich über die gesamte Länge L erstreckt.

Beispiel 1 - Erfindungsgemäßer Katalysator K1:

Zur Präparation des erfindungsgemäßen Katalysators K1 wird der Washcoat für Materialzone A lediglich über 2/3 der Länge des Substrates von der Stirnfläche b aus aufgebracht.

Der Washcoat C wird in einen Washcoat C1 und C2 aufgeteilt, wobei der Washcoat C1 dem Washcoat für Materialzone C entspricht. Der Washcoat C2 unterscheidet sich vom Washoat C1 nur darin, dass er kein Rhodium enthält.

Von der Stirnfläche a aus wird daraufhin Washcoat C2 über 1/3 der Länge des Substrates aufgebracht und bildet somit Materialzone B. Anschließend erfolgt die Beschichtung mit Washcoat C1 von der Stirnfläche b aus über 2/3 der Länge des Trägers und bildet somit Materialzone C.

Beispiel 2 - Erfindungsgemäßer Katalysator K2:

Zur Herstellung dieses Katalysators wird auf Katalysator K1 zusätzlich eine Materialzone D aufgebracht, die Platin und Palladium auf Aluminiumoxidträgerpulver enthält, oberhalb von Materialzone B und C angeordnet ist und sich über die gesamte Länge L erstreckt.

Zur Testung der Katalysatoraktivität werden die Proben zunächst für 16h einer thermischen Vorbehandlung bei 800°C in einer Atmosphäre aus 10% Sauerstoff, 10% Wasser und 80% Stickstoff ausgesetzt.

Vor der Katalysatortestung wird der Katalysator zunächst unter mageren Abgasbedingungen aus 8% Sauerstoff, 10% Wasser und 10% Kohlenstoffdioxid sowie dem Rest aus Stickstoff auf 650°C aufgeheizt. Dort wird der Katalysator zunächst für 100s mit 10 Zyklen mit 10s fettem Abgas bestehend aus 2% CO in Stickstoff und 10s magerem Abgas aus 1% O2 in Stickstoff konditioniert. Nach Abkühlung auf 350°C in Stickstoff wird der Katalysator ein weiteres Mal mit 3 Zyklen aus 20s fettem und 20s magerem Abgas wie eben beschrieben konditioniert. Dann wird in Stickstoff auf die Temperatur abgekühlt, bei der die NOx-Speicherfähigkeit getestet werden soll.

Anschließend wird ein Gasgemisch mit einer NOx-Konzentration $c(NOx_{in})$ wie in Tabelle 1 aufgeführt über den Katalysator geleitet und mittels FTIR die NOx-Konzentration im Gasstrom hinter dem Katalysator $c(NOx_{out})$ gemessen.

Die NOx-Einspeicherungsrate berechnet sich nach folgender Formel:

$$\text{NOx-Einspeicherungsrate [\%]} = 100 \times (c(NOx_{in}) - c(NOx_{out})) / c(NOx_{out})$$

Tabelle 1

|  | mager |
|---|---|
| GHSV [1/h] | 30000 |
| NO [ppm] | 500 |
| $NO_2$ [ppm] | 0 |
| $O_2$ [vol%] | 8 |
| CO [vol%] | 0 |
| $H_2$ [vol%] | 0 |
| HC [ppm C3] ($C_3H_6$/$C_3H_8$) | 0 |
| $CO_2$ [vol%] | 10 |
| $H_2O$ [vol%] | 10 |

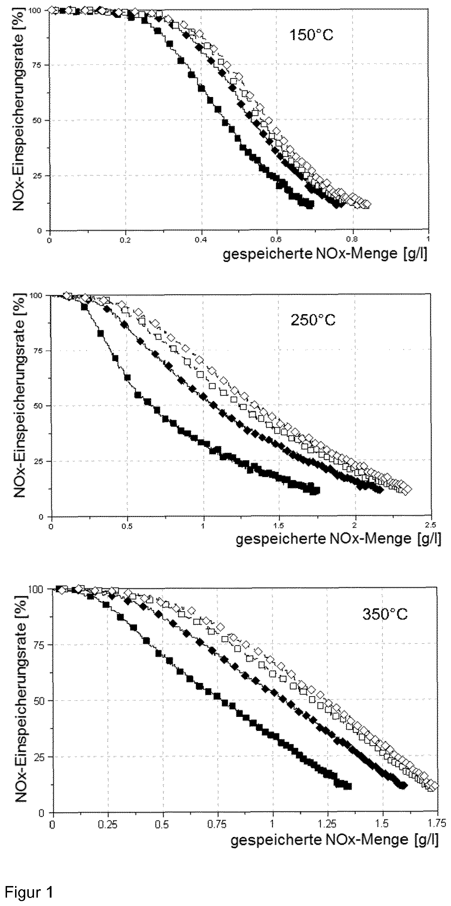

Figur 1 zeigt die NOx-Einspeicherungsrate als Funktion der bereits gespeicherten NOx-Menge für eine Betriebstemperatur der Katalysatoren von 150°C (obere Graphik), 250°C (mittlere Graphik) und 350°C (untere Graphik), wobei die Temperatur vor dem Katalysator gemessen wird. K1 ist mit offenen Quadraten, K2 offenen Rauten, RK1 mit vollen Quadraten und RK2 mit vollen Rauten dargestellt.

Wie zu erkennen ist, weisen die erfindungsgemäßen Katalysatoren bei identischer NOx-Beladung eine höhere NOx-Einspeicherungsrate R auf, wobei gilt:

$$R_{K2} > R_{K1} > R_{K2} > R_{K1}$$

Die gleichen Katalysatoren werden mit 1 g Schwefel pro Liter Katalysatorvolumen durch Zugabe von $SO_2$ in den Gasstrom belegt . Dazu wird die Katalysatorprobe auf 350°C aufgeheizt und so lange mit einer Gasmischung aus 100pm $SO_2$, 10% $O_2$, 10% $H_2O$ und 10% $CO_2$ in Stickstoff beaufschlagt, bis die entsprechende Schwefelmenge erreicht ist. Anschließend wird der Katalysator mit einer Aufheizrate von 10 K/min unter der in Tabelle 2 gezeigten Gasatmosphäre aufgeheizt, wobei im Wechsel 15s fettes Abgas und 5s mageres Abgas beaufschlagt wird, und das freigesetzte $H_2S$ und $SO_2$ mit einem Massenspektrometer gemessen.

Tabelle 2

|  | **mager** | **fett** |
|---|---|---|
| GHSV [1/h] | 50000 | 50000 |
| NO [ppm] | 0 | 0 |
| H2 [vol%] | 0 | 1,3 |
| $O_2$ [vol%] | 8 | 0 |
| CO [vol%] | 0 | 4 |
| HC [ppm C3] ($C_3H_6$/$C_3H_8$) | 50 (33 / 17) | 50 (33 / 17) |
| $CO_2$ [vol%] | 10 | 10 |
| $H_2O$ [vol%] | 10 | 10 |

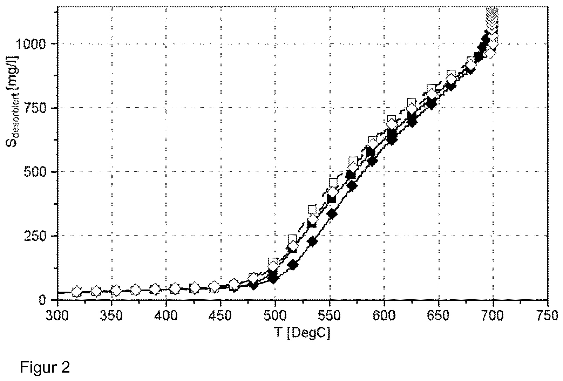

Figur 2 zeigt die freigegebene Schwefelmenge als Funktion der Temperatur. Die Katalysatorzuordnung zu den Kurven entspricht der von Figur 1.

Die freigesetzte Schwefelmenge $m_s$ bei gleicher Temperatur ist ein Maß für die Entschwefelbarkeit, wobei sich für 600°C aus Figur 2 folgendes Ergebnis ergibt:

$$m_{K1} > m_{K2} > m_{RK1} > m_{RK2}$$

Es zeigt sich also, dass die erfindungsgemäßen Katalysatoren eine höhere NOx-Einspeicherungsrate bei besserer Entschwefelbarkeit als die Referenzkatalysatoren aufweisen.

**Patentansprüche**

1. Katalysator, der ein Trägersubstrat der Länge L, welches sich zwischen einer ersten Stirnfläche a und einer zweiten Stirnfläche b erstreckt, sowie unterschiedlich zusammengesetzte katalytisch aktive Materialzonen A, B und C umfasst, wobei

   - Materialzone A Platin oder Platin und Palladium, ein oder mehrere Erdalkaliverbindungen sowie Ceroxid enthält
   - Materialzone B Platin oder Platin und Palladium sowie Ceroxid enthält
   - Materialzone C Platin oder Platin und Palladium sowie Rhodium und Ceroxid enthält

   wobei

   - Materialzone A sich ausgehend von Stirnfläche b auf einer Länge von 30 - 90% der Länge L erstreckt und
   - Materialzone B sich ausgehend von der Stirnfläche a auf einer Länge von 10% - 70% der Länge L erstreckt und
   - Materialzone C über Materialzone A angeordnet ist und sich ausgehend von Stirnfläche b über 30 - 90% der Länge L erstreckt

2. Katalysator gemäß Anspruch 1, **dadurch gekennzeichnet, dass** der Katalysator eine Materialzone D über Materialzone B und C aufweist, welche sich über mindestens 50% der gesamten Länge L erstreckt und Platin oder Platin und Palladium mit einem Verhältnis Pt/Pd > 5/1 enthält

3. Katalysator gemäß Anspruch 1 und/oder 2, **dadurch gekennzeichnet, dass** Materialzone A Platin und kein Palladium enthält.

4. Katalysator gemäß einem oder mehreren der Ansprüche 1 bis 3, **dadurch gekennzeichnet, dass** Materialzone B Platin und kein Palladium enthält.

5. Katalysator gemäß einem oder mehreren der Ansprüche 1 bis 4, **dadurch gekennzeichnet, dass** Materialzone C Platin und Rhodium und kein Palladium enthält.

6. Katalysator gemäß einem oder mehreren der Ansprüche 1 bis 5, **dadurch gekennzeichnet, dass** Materialzone D Platin und kein Palladium enthält.

7. Katalysator gemäß einem oder mehreren der Ansprüche 1 bis 6, **dadurch gekennzeichnet, dass** Materialzone A Ceroxid und als Erdalkaliverbindung Bariumoxid und kein Magnesiumoxid enthält.

8. Verfahren zur Konvertierung von $NO_x$ in Abgasen von Kraftfahrzeugen, die mit mager betriebenen Motoren betrieben werden, **dadurch gekennzeichnet, dass** das Abgas über einen Katalysator gemäß einem oder mehreren der Ansprüche 1 bis 7 geleitet wird.

**Claims**

1. Catalyst, comprising a carrier substrate of length L, which extends between a first end surface a and a second end surface b, and catalytically active material zones A, B, and C of different compositions, wherein

   - material zone A contains platinum or platinum and palladium, one or more alkaline earth compounds, and cerium oxide
   - material zone B contains platinum or platinum and palladium, and cerium oxide
   - material zone C contains platinum or platinum and palladium, and rhodium and cerium oxide

wherein

- material zone A extends, starting from end surface b, over a length of 30 - 90% of length L, and
- material zone B extends, starting from end surface a, over a length of 10% - 70% of length L, and
- material zone C is arranged over material zone A and extends, starting from end surface b, over 30 - 90% of length L.

**2.** Catalyst according to claim 1, **characterized in that** the catalyst has, over material zones B and C, a material zone D which extends over at least 50% of the total length L and contains platinum or platinum and palladium with a Pt/Pd ratio of > 5/1.

**3.** Catalyst according to claim 1 and/or 2, **characterized in that** material zone A contains platinum and no palladium.

**4.** Catalyst according to one or more of claims 1 through 3, **characterized in that** material zone B contains platinum and no palladium.

**5.** Catalyst according to one or more of claims 1 through 4, **characterized in that** material zone C contains platinum and rhodium and no palladium.

**6.** Catalyst according to one or more of claims 1 through 5, **characterized in that** material zone D contains platinum and no palladium.

**7.** Catalyst according to one or more of claims 1 through 6, **characterized in that** material zone A contains cerium oxide and, as an alkaline earth compound, barium oxide and no magnesium oxide.

**8.** Method for converting $NO_x$ in exhaust gases of motor vehicles that are operated with lean burning engines, **characterized in that** the exhaust gas is guided over a catalyst according to one or more of claims 1 through 7.

**Revendications**

**1.** Catalyseur, comprenant un substrat de support doté d'une longueur L, qui s'étend entre une première face frontale a et une deuxième face frontale b, ainsi que des zones matérielles A, B et C catalytiquement actives de compositions différentes, dans lequel

- la zone matérielle A contient du platine ou du platine et du palladium, un ou plusieurs composés alcalino-terreux ainsi que de l'oxyde de cérium
- la zone matérielle B contient du platine ou du platine et du palladium ainsi que de l'oxyde de cérium
- la zone matérielle C contient du platine ou du platine et du palladium ainsi que du rhodium et de l'oxyde de cérium

dans lequel

- la zone matérielle A s'étend à partir de la face frontale b sur une longueur de 30 - 90 % de la longueur L et
- la zone matérielle B s'étend à partir de la face frontale a sur une longueur de 10 % - 70 % de la longueur L et
- la zone matérielle C est disposée au-dessus de la zone matérielle A et s'étend à partie de la face frontale b sur 30 - 90 % de la longueur L

**2.** Catalyseur selon la revendication 1, **caractérisé en ce que** le catalyseur présente une zone matérielle D au-dessus des zones matérielles B et C, qui s'étend sur au moins 50 % de la longueur L totale et contient du platine ou du platine et du palladium selon un rapport Pt/Pd > 5/1

**3.** Catalyseur selon la revendication 1 et/ou 2, **caractérisé en ce que** la zone matérielle A contient du platine et pas de palladium.

**4.** Catalyseur selon l'une ou plusieurs des revendications 1 à 3, **caractérisé en ce que** la zone matérielle B contient du platine et pas de palladium.

**5.** Catalyseur selon l'une ou plusieurs des revendications 1 à 4, **caractérisé en ce que** la zone matérielle C contient du platine et du rhodium et pas de palladium.

6. Catalyseur selon l'une ou plusieurs des revendications 1 à 5, **caractérisé en ce que** la zone matérielle D contient du platine et pas de palladium.

7. Catalyseur selon l'une ou plusieurs des revendications 1 à 6, **caractérisé en ce que** la zone matérielle C contient de l'oxyde de cérium et, en tant que composé alcalino-terreux, de l'oxyde de baryum et pas d'oxyde de magnésium.

8. Procédé de conversion de $NO_x$ dans des gaz d'échappement de véhicules automobiles, qui fonctionnent avec des moteurs à mélange pauvre, **caractérisé en ce que** le gaz d'échappement est guidé à travers un catalyseur selon l'une ou plusieurs des revendications 1 à 7.

Figur 1

Figur 2

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- WO 2011154913 A
- WO 2017191099 A
- EP 0885650 A2
- WO 2009158453 A1
- WO 2012029050 A1
- WO 2014108362 A1
- WO 2017134065 A1
- WO 2017144426 A1
- US 2013150236 A1
- US 2013310248 A1
- US 2018195426 A1
- US 2017096923 A1
- US 2015202572 A1
- US 2006117736 A1
- EP 1527018 B1